# EUROPEAN PATENT APPLICATION

(11) **EP 4 800 915 A1**
(43) Date of publication of application: **02.09.2026**
(21) Application number: 25161058.0
(22) Date of filing: 28.02.2025
(51) Int. Cl.: H02P 21/16, H02P 21/22, H02P 25/22, H02P 29/64

(54) **DETERMINATION OF WINDING SET RESISTANCE**

(71) Applicant: Siemens Gamesa Renewable Energy A/S, 7330 Brande (DK)
(72) Inventor: Azar, Ziad, Sheffield S10 4ED (GB); Freire, Nuno Miguel Amaral, 3150-109 Condeixa (PT); Zhu, Ziqiang, Sheffield S10 5TR (GB); Wang, Peng, Sheffield S3 8RA (GB)
(74) Representative: SGRE-Association

(57) **Abstract**

It is described a method and arrangement of determining a resistance (R) of at least one multi-phase stator winding set (7) of an electrical generator (4), in particular permanent magnet generator, the method comprising: operating the generator (4) by performing closed loop current control (11) including to receive a reference stator winding current (12) and an actual stator winding current (13, 13'), in particular respective d-component and q-component in a rotor fixed dq-frame; supplying, for a selected time interval (t0-t1), to the current control, a modified actual stator winding current (13') being different from the actual stator winding current (13) by a current modification quantity (34, 15); determining the resistance (R) of the stator winding set (7) based on at least one component of an actual stator winding current (i_alpha_dc) or the current modification quantity (i_dc) and at least one component of a stator winding voltage (u_alpha).

## Description

### Field of invention

The present invention relates to a method and to a corresponding arrangement of determining a resistance of at least one multi-phase stator winding set of an electrical generator. Furthermore, the present invention relates to a method and to a corresponding operating module for operating an electrical generator. Furthermore, the present invention relates to a wind turbine.

### Art Background

A stator winding resistance of an electrical machine, in particular a generator, may be required for improving control of a generator, for example for PI parameter setting, thermal monitoring and improvement of sensorless position observation. Conventionally, the stator winding resistance may be difficult to measure, particularly during operation as it varies over time. Resistance may vary directly with winding temperature, and indirectly with load that causes winding temperature change. Accurate winding temperature measurement may be difficult via the installation of conventional measurement devices. On the other hand, under sensorless control, the rotor position observation error may lead to errors in the parameter estimation, leading to less estimation accuracy.

Conventionally, under position sensorless control, the rotor position error may lead to inaccurate stator resistance estimation of the permanent magnet (PM) synchronous machine. Conventional resistance determination methods, however, do not offer identification accuracy nor reflection of resistance variations against operating conditions. Furthermore, the conventional methods may be influenced by machine parameters (e.g. inductances and flux linkage, etc.) and/or by rotor position error derived from sensorless rotor position determination

Thus, there may be a need for a method and a corresponding arrangement of determining a resistance of at least one multi-phase stator winding set of an electrical generator, wherein stator winding resistance may be measured in a simple manner, in particular during operation of the generator which also meets some accuracy requirements and which in particular may be performed under sensorless control which can be applicable to permanent magnet generators with saliency.

### Summary of the Invention

This need may be met by the subject matter according to the independent claims. Advantageous embodiments of the present invention are described by the dependent claims.

According to an embodiment of the present invention it is provided a method of determining a resistance of at least one multi-phase stator winding set of an electrical generator, in particular permanent magnet generator, the method comprising: operating the generator by performing closed loop current control including to receive a reference stator winding current and (e.g. as feedback) an actual stator winding current, in particular respective d-component and q-component in a rotor fixed dq-frame; supplying, for a selected time interval, to the current control, a modified actual stator winding current being different from the actual stator winding current by a current modification quantity; determining the resistance of the stator winding set based on at least one component of an actual stator winding current (e.g. i_alpha_dc) and/or the current modification quantity (e.g. i_dc) and at least one component of a stator winding voltage (e.g. u_alpha).

The method may be implemented in software and/or hardware and may for example be performed by a module or a portion of a controller, in particular a wind turbine controller. The electrical generator may in particular be a main wind turbine generator which under normal conditions produces electrical AC power which is injected into a utility grid.

The stator winding set may provide three phases, five phases, seven phases or even a higher number of phases. The winding set comprises for each phase a strand or wire section comprising one or more coils at least partially wound within slots of a stator yoke. The stator winding set may be arranged at the stator in a concentrated winding topology or a distributed winding topology. The three phases or the three strands or even a higher number of strands corresponding to the respective phases may be connected in a star configuration, meaning that ends of strands or wires for all phases are electrically connected at a central junction. Other ends of the strands or wires comprised in the winding set may for example be connected to a converter which may be configured as converting a variable frequency AC power stream to a substantially DC power stream utilizing multiple controllable switches, such as power transistors.

The generator may thus comprise a stator yoke including teeth having slots in between at which or within which the stator winding set (or plural winding sets) is arranged. The generator may further comprise a rotor having permanent magnets mounted, in particular an outer rotor, which is rotatably supported relative to the stator.

The generator may, during the method, be operated for normal power production or for any other operating point. The generator may for example be operated at a rotational speed close to or around (for example within ± 20%) of a nominal rotational speed and may produce power for example around (or e.g. within ± 20%) of a nominal output power.

The closed loop current control may comprise at least two control portions or controllers such as PI controllers which may for example perform the current control based on error inputs in the d-component and the q-component of a dq-coordinate system rotating synchronously with the rotor. Other implementations are possible. The closed loop current control requires feedback, namely current feedback also referred to as the actual stator winding current. The reference quantities as well as the actual quantities may each comprise one or more components, in particular two components, of a dq-coordinate system.

During normal operation, the reference stator winding current may substantially be constant which may hold for the d-component as well as for the q-component. The actual stator winding current may for example correspond to a measured current which may for example be measured in the abc-frame and which may then be transformed to the dq-coordinate system. The abc-stator winding current may be measured by respective appropriate current sensors which are arranged to measure currents in all strands or wires corresponding to all phases.

The modified actual stator winding current may not correspond or may not be equal to the actual stator winding current but is different from the actual stator winding current. Intentionally, the modified actual stator winding current is, however, utilized as a feedback to the closed loop current control in order to enable determination of the resistance.

This modified feedback provokes a response of the generator which depends on the resistance and which allows to then determine the resistance. The response of the generator comprises a change in the stator winding voltage which may then be detected and utilized for determining the stator winding resistance. The stator winding voltage may for example be taken from controller output quantities or may for example be measured, depending on the application.

For obtaining the respective current related quantity the actual stator winding current is e.g. measured.

The selected time interval may be defined or selected such that operation performance, such as power output and/or noise generation and/or ripple generation is within acceptable limits. The method may be performed from time to time in order to for example also derive from the resistance a temperature characteristic or a temperature of the winding set in order to provide temperature monitoring, for example. The determined resistance may be employed or utilized for diverse or several different operating modules or purposes regarding improvement of operating the generator.

An amplitude of the current modification quantity may e.g. be between 5 % and 15 % of a rated current.

According to an embodiment of the present invention, current modification quantity can be represented as at least one of: a constant (DC) current modification quantity corresponding to the alpha-component of current in a stator-fixed alpha-beta coordinate system being in particular related to a stator-fixed abc-coordinate frame as follows: ${T}_{3 s / 2 s} = \frac{2}{3} \left[\begin{matrix}1 & - \frac{1}{2} & - \frac{1}{2} \\ 0 & \frac{\sqrt{3}}{2} & - \frac{\sqrt{3}}{2}\end{matrix}\right] ,$ where the matrix can transform variables in abc-coordinate frame to alpha-beta-coordinate frame;
a constant (DC) current modification quantity of at least one phase, in particular two phases, of the stator current (in the abc-coordinate system); an AC current modification quantity of at least one dq-component of current.

The current in the alpha-beta coordinate system may for example be derived based on current in the abc-frame by applying the Clarke transformation. The alpha-beta coordinate system is similar as the abc-coordinate frame a stator fixed coordinate frame. The equivalent representation of current in the alpha-beta as well as in the abc-coordinate system may assume that the sum of the three-phase currents is zero at the star point. Thus, the three current values relating to the three phases are not independent to each other, but only effectively two quantities are independent of each other which may be set as the alpha-component and the beta-component of the current.

Thus, the current modification quantity may be represented in different coordinate systems. The representation in the alpha-beta coordinate system may be especially advantageous, since this representation is for example not dependent on any rotor position determination which may be erroneous. Depending on the particular application, however, it may be advantageous under certain conditions to inject or apply the modified actual stator winding current as feedback at any position within the current control loop, as long as this addition is a constant or substantially constant current modification quantity of the alpha-component in the alpha-beta coordinate system.

According to an embodiment of the present invention, the constant current modification quantity corresponding to the alpha-component of current is added to an alpha-component output of a transformation module transforming actual currents in abc-frame to actual currents in alpha-beta frame, in order to obtain an alpha component of the modified actual current, wherein in particular a beta-component of the modified actual current equals to a beta-component of the actual current.

Since the current in the alpha-beta coordinate system is not affected to any potential errors in the rotor position determination (which for example applies to the dq-coordinate system), this implementation provides several advantages.

According to an embodiment of the present invention, the current control generates, based on a deviation between the reference stator winding current and the modified actual currents, a voltage reference, in particular component-wise in dq-coordinate system, wherein the voltage reference is employed to control the generator, in particular via control of a converter.

The current control may for example generate for each of the d-component and the q-component based on the respective deviation (between reference and modified actual current) in the d-component and the q-component a voltage reference as a d-component and a voltage reference as a q-component. The voltages in the dq-frame may then be transformed to voltages in the alpha-beta frame by a transformation module. The voltages in the alpha-beta frame may then be supplied to a space vector pulse width modulation block which thereupon derives gate driver signals for gates of power transistors of a converter which is electrically coupled to the generator.

According to an embodiment of the present invention, determining the resistance includes: determining a DC component of the alpha-component of the actual current in order to define a DC current quantity; determining a DC component of an alpha-component of a reference voltage or extracting a DC component of the alpha component of the actual, in particular measured, voltage, in order to obtain a DC voltage quantity; forming a ratio between the DC voltage quantity and the DC current quantity, to obtain the resistance.

Thereby, the determination of the resistance may be achieved in a simple manner and alternatives are provided to adapt the method according to the particular application.

According to an embodiment of the present invention, the stator winding reference current in the dq-frame is constant, wherein due to supplying the modified actual current to the current control, AC components of the actual current evolve,
As a response, also modified voltage is generated by the combination of the control portion and the generator and from the modified voltage and the above-mentioned DC current quantity the resistance can be determined.

Thus, the method may be applied in the case that the current control has a relatively low control bandwidth or a high bandwidth. Thereby, flexibility of the control components may be improved and the method may have a more general applicability.

According to an embodiment of the present invention, at least one of the following holds: supplying the modified actual current to the current control is performed for a time period between 0.1 s and 2 s and/or for between 0.5 and 2 (50% to 200%) of a fundamental electrical period of the generator; the method is performed while the generator produces output power; for rotor position determination a sensorless method is used.

Thus, the method may in particular be performed online during substantial normal operation of the generator and a disturbing time may be restricted. Since the method may not be sensitive to any rotor position determination errors, the method is in particular also applicable for the case that the rotor position is determined without a sensor, for example encoder, by a sensorless method, for example a BEMF (back electromotive force) based method.

According to an embodiment of the present invention, the stator winding set comprises for each of three phases a wire partly wound in slots of a stator of the generator to form one or more coils, the determined resistance of the stator winding set corresponding to an average of the resistances of the three wires which are connected in a star configuration.

Thus, the resistance may be determined which is commonly used for modelling generator behaviour in a mathematical/physical model.

The method may also be applicable to a winding set connected in a triangular configuration (delta connection).

According to an embodiment of the present invention, the electrical machine is electrically connected to a converter including plural controllable switches, wherein based on the reference voltage, in particular in a stator-fixed coordinate system, pulse width modulation signals are derived and supplied of the converter for opening and closing the switches for controlling the generator.

The control of the generator may involve space vector control, the pulse width modulation signals may be generated by gate driver circuitry. The inverter may also be referred to as a generator-side converter. An entire wind turbine may further comprise a DC link connected to the generator-side converter and furthermore a grid-side converter connected to the DC link. Thereby, conventional components may be supported.

According to an embodiment of the present invention, the generator comprises at least one further multi-phase stator winding set, the method further comprising: operating the generator by performing further closed loop current control including to receive a further reference stator winding current and (as feedback) a further actual stator winding current, in particular respective d-component and q-component in a rotor fixed dq-frame; supplying, for a further selected time interval, to the further current control, a further modified actual stator winding current being different from the further actual stator winding current by a further current modification quantity (e.g. a DC quantity of an alpha component in alpha-beta frame); determining a further resistance of the further stator winding set based on at least one component of the further actual stator winding current and at least one component of a further stator winding voltage.

According to an embodiment of the present invention the further current modification quantity is designed or determined such as to counteract, when applied to the further winding set, in particular to minimize, any vibration, in particular torque ripple, caused by applying the current modification quantity to the winding set.

The further current modification quantity may be different, in particular in sign, from the current modification quantity, in particular having opposite sign, the further current modification quantity having same or different amplitude, e.g. between 5 % and 15 % of a rated current, compared to the current modification quantity.

In case of a dual winding set generator, the further current modification quantity may have a substantially same amplitude compared to the current modification quantity, but opposite sign.

Thereby, it is possible to support two or more multi-phase stator winding sets in one generator. The generator may for example comprise two, three, four, five, six or even a greater number of multi-phase winding sets. For each of these winding sets, the respective resistance may be determined according to embodiments of the present invention. Thereby, the respective current modification quantity associated with each winding set may be defined or selected to be different in phase and/or sign, for example such that potential torque ripples may be reduced or even avoided by cancellation. Thus, also multiple multi-phase stator winding sets may be supported.

The method may e.g. be extended to dual (exactly two winding sets) (or more than two winding set) three phase PMSGs by injection two opposite DC alpha-axis currents into two sets, which not only can cancel influence of position error and other parameters on stator resistance estimation but also can cancel the torque ripple during injection.

The estimation process can be divided into four steps:
(1). Inject two opposite DC current into α-axis current feedback between two sets.
(2). Extract the DC component in α-axis current (*i*_{*α*1_dc}, *i*_{α2_dc}).
(3). Extract the DC component in α-axis voltage (*u*_{*α*1_dc}, *u*_{*α*2_*dc*}).
(4). $\hat{R} = \frac{{u}_{α 1 _ dc}}{{i}_{α 1 _ dc}} = \frac{{u}_{α 2 _ dc}}{{i}_{α 2 _ dc}} .$

From the estimation process, it can be found that the DC component in α-axis voltage is only related to stator resistance parameter, which can get rid of the influence of other parameters, i.e., position error, dq-axis inductances, mutual inductance between two sets, and PM flux linkage. Thus, stator resistance can be independently estimated as the ratio of the DC component in α-axis voltage to the DC component in α-axis current. Moreover, the opposite DC current injections can totally cancel torque ripple.

According to an embodiment of the present invention it is provided a method of operating an electrical generator having at least one multi-phase stator winding set, in particular permanent magnet generator, the method comprising: performing a method of determining a resistance of the electrical generator according to one of the preceding embodiments; using the determined resistance to perform at least one of: controlling the generator; monitoring, in particular temperature monitoring, the generator, in particular stator; defining at least one parameter of a controller, in particular PI controller; performing sensorless position observation of the rotor.

Thereby, a variety of methodologies using the resistance may be supported.

It should be understood, that features, individually or in any combination, disclosed, described, explained or provided for a method of determining a resistance of a multi-phase stator winding set of an electrical generator are also, individually or in any combination, applicable to an arrangement for determining a resistance of a multi-phase stator winding set, according to embodiments of the present invention or vice versa.

According to an embodiment of the present invention it is provided an arrangement for determining a resistance of at least one multi-phase stator winding set of an electrical generator, in particular permanent magnet generator, the arrangement comprising: a closed loop current control including to receive a reference stator winding current and (as feedback) an actual stator winding current, in particular respective d-component and q-component in a rotor fixed dq-frame, connected to the generator for operating the generator; a signal generator adapted to supply, for a selected time interval, to the current control, a modified actual stator winding current being different from the actual stator winding current by a current modification quantity; a determination module adapted to determine the resistance of the stator winding set based on at least one component of an actual stator winding current (i_alpha_dc) and at least one component of a stator winding voltage (u_alpha).

According to an embodiment of the present invention it is provided an operating module for an electrical generator having at least one multi-phase stator winding set, in particular permanent magnet generator, the operating module comprising: an arrangement for determining a resistance of the electrical generator according to the preceding embodiment; at least one operation portion adapted to use the determined resistance to perform at least one of: controlling the generator; monitoring, in particular temperature monitoring, the generator, in particular stator; defining at least one parameter of a controller, in particular PI controller; performing sensorless position observation of the rotor.

Furthermore, it is provided a wind turbine, comprising: a hub at which plural rotor blades are mounted; an electrical generator, in particular permanent magnet generator, having a rotor coupled to the hub and having a stator including at least one multi-phase stator winding set; an arrangement according to a previous embodiment or an operation module according to a previous embodiment.

The arrangement may be configured to carry out a method of determining a resistance of a multi-phase stator winding set. The operating module may be configured to carry out or control a method of operating an electrical generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind turbine according to an embodiment of the present invention comprising an operating module according to an embodiment of the present invention;
Fig. 2 illustrates a curve for explaining current feedback modification;
Figs. 3 and 4 illustrate curves of currents in different coordinate systems considered according to embodiments of the present invention;
Figs. 5 and 6 illustrate curves of currents in different coordinate systems considered according to embodiments of the present invention;
Figs. 7 and 8 illustrate curves showing current feedback modification and resulting torque;
Fig. 9 schematically illustrates a wind turbine according to an embodiment of the present invention comprising an operating module according to an embodiment of the present invention.

### Detailed Description

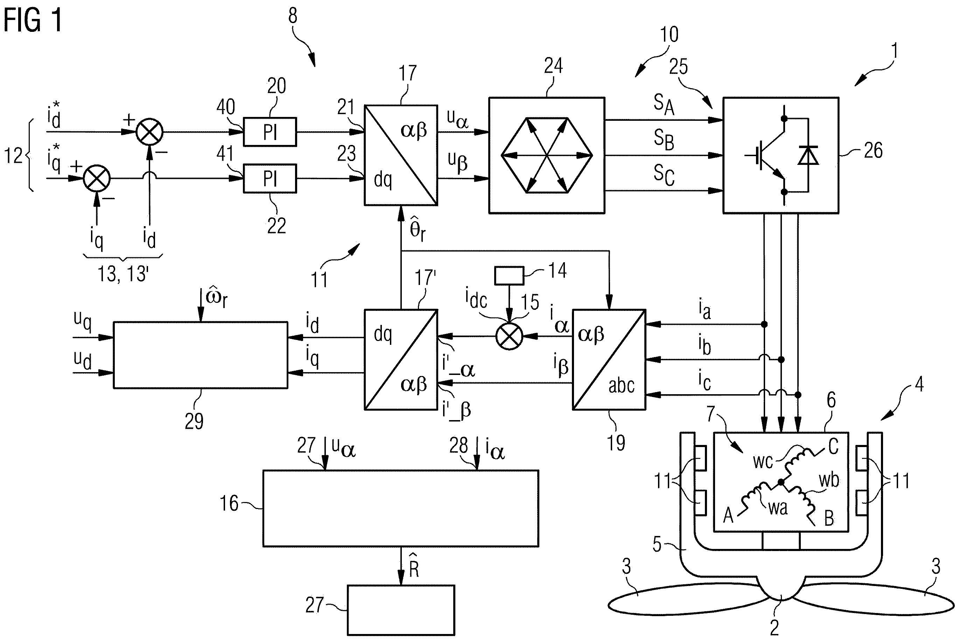

The wind turbine 1 schematically illustrated in Fig. 1 comprises a hub 2 at which plural rotor blades 3 are mounted. The wind turbine 1 further comprises a generator 4, having a rotor 5 coupled to the hub 2, and having a stator 6 including at least one multi-phase stator winding set 7, in the illustrated embodiment providing three phases. In the illustrated embodiment, the rotor 5 is an outer rotor having plural permanent magnets 11 mounted thereon wherein the rotor 5 is rotatably mounted relative to the stator 6.

The wind turbine 1 further comprises an operating module 8 or an arrangement 10 for determining a resistance according to an embodiment of the present invention. The operating module 8 comprises the arrangement 10 for determining a resistance of the multi-phase stator winding set 7 of the electrical generator 4 according to an embodiment of the present invention.

The arrangement 10 comprises a closed loop current control 11 including to receive a reference stator winding current i*_d, i*_q (collectively labelled with reference sign 12) and an actual stator winding current i_q, i_d (collectively labelled with label 13), wherein the closed loop current control 11 is connected to the generator 4 for operating the generator.

A signal generator 14 is adapted to supply, for a selected time interval, to the current control 11 a modified actual stator winding current 13' being different from the actual stator winding current 13 by a current modification quantity which is denoted with reference sign 15 and which can be represented in the alpha-beta coordinate system as a DC quantity i_dc.

A determination module 16 which is also included in the arrangement 10 is adapted to determine the resistance R of the stator winding set 7 based on at least one component of an actual stator winding current 13 (derived for example from components i_a, i_b, i_c of the current in the abc-coordinate frame) and at least one component of a stator winding voltage, for example u_alpha as output by a transformation module 17.

The arrangement 10 is adapted to carry out a method of determining a resistance R of at least one multi-phase stator winding set 7 of the electrical generator 4 according to an embodiment of the present invention. Thereby, the generator 4 is operated by performing closed loop current control including to receive the reference stator winding current 12 and as feedback an actual stator winding current 13. Then, for a selected time interval to the current control 11, a modified actual stator winding current 13' being different from the actual stator winding current 13 by a current modification quantity 15 is supplied as feedback to the current control 11. The resistance is then determined, for example by determination module 16 based on one component of an actual stator winding current 13 or the current modification quantity 15 and at least one component of a stator winding voltage, for example u_alpha. In the illustrated embodiment, the current modification quantity 15 can be represented as a constant current modification quantity i_dc corresponding to the alpha-component of current in a stator-fixed alpha-beta coordinate system. This alpha-beta coordinate system is related by a Clarke transformation matrix to an abc-coordinate system. The alpha-component is characterized to be colinear with the α-axis (or an other axis) of the abc-coordinate system. For example, the beta-axis of the alpha-beta coordinate system is not colinear with any of the axes of the abc-coordinate system.

In the illustrated embodiment, the constant current modification quantity 15 corresponding to the alpha-component of current is added, using addition element 18 to an alpha-component output i_alpha of a transformation module 19 transforming actual currents i_a, i_b, i_c the abc-frame to actual currents i_alpha, i_beta in an alpha-beta coordinate system, in order to obtain an alpha-component of the modified actual current denoted as i'_alpha. As can be seen from Fig. 1, the beta-component i'_beta of the modified actual current equals to the beta-component i_beta of the actual current.

As can be appreciated from Fig. 1, the current control 11 comprises a PI controller 20 for receiving an error signal 40 of current in the d-component and outputting a setting signal 21 to the transformation module 17. The current control 11 further comprises a second PI controller 22 which receives an error signal 41 between currents in a q-component and outputs a setting signal 23 to the transformation module 17. The setting signals 21, 23 correspond to a d- and q-component of a voltage. The voltage in the dq-frame is transformed by transformation module 17 to voltages u_alpha, u_beta in the alpha-beta coordinate system and are provided to a space vector pulse width modulation module 24. The module 24 generates gate driver signals or pulse width modulation signals 25 which are supplied to a converter 26 which is electrically connected to the generator 4.

The resistance R is determined by forming a ratio between DC quantities based on or derived from a voltage quantity 27 (e.g. u_alpha) and a current quantity 28 (e.g. i_alpha). Those DC quantities (derived from 27, 28) may be embodied in different manners according to different embodiments of the present invention. In one embodiment, the DC current quantity may be determined as a DC component of an alpha-component of the actual current 13'. The DC voltage quantity may for example be the alpha-component of the voltage, i.e., u_alpha as output by the transformation module 17.

More generally, the determination module 16 receives as input a voltage quantity 27 and a current quantity 28 related to the winding set 7. Internally, the module 16 determines a DC current quantity and a DC voltage quantity. The voltage quantity 27 may for example correspond to the alpha-component of the voltage as output by the module 17, i.e., u_alpha. In other embodiments, the voltage quantity 27 may correspond to a measured voltage, for example the alpha-component of a measured voltage. The current quantity 28 may for example correspond to an alpha-component i_alpha of the actual current. In other embodiments, for example the three-phase currents may be supplied to the module 16 as well as the three-phase voltages, for example as measured, may be supplied to the module 16. Respective DC quantities of the alpha-component with respect to voltage and current may be determined by the module 16 and from the ratio between the DC voltage quantity and the DC current quantity, the resistance R may be determined.

As is schematically depicted in Fig. 1, the stator winding set 7 comprises for each of three phases a wire wa, wb, wc which is partly wound in slots (not illustrated) of the stator 6 to form one or more coils. The determined resistance R of the stator winding set may correspond to an average of resistances R1, R2, R3 of the three wires wa, wb, wc which are connected in a star configuration.

The generator 4 may comprise more than one multi-phase winding set and the above explained methodology may be applied to any one of the winding sets in order to determine corresponding winding set resistances.

The wind turbine 1 further comprises one operating portion 27 which is adapted to use the determined resistance R for various operations as detailed above.

As can be seen in Fig. 1, the current control 11 involves to transform the actual (i_alpha, i_beta) or modified actual (i'_alpha, i'_beta = i_beta) currents in the alpha-beta frame to the dq-frame by a transformation module 17'. The actual currents or modified actual currents 13, 13' are then supplied to a sensorless observer 29 for observing or determining rotor position which is denoted as θ_r. The module 29 also determines the rotational speed denoted as ω_r.

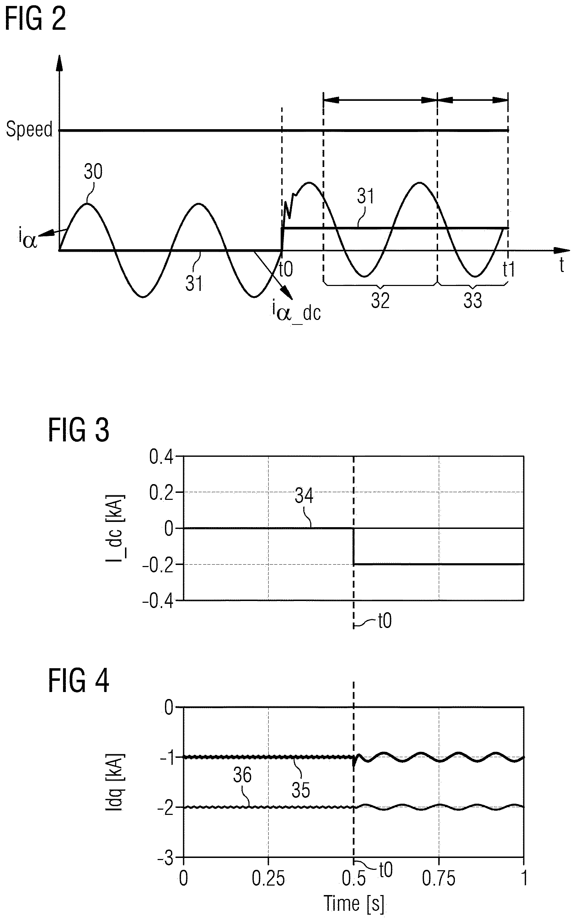

In Fig. 2, the abscissa indicates time and the ordinate indicates amplitude of currents. A curve 30 denotes the alpha-component i_alpha of the actual stator current and a curve 31 denotes the DC component i_alpha_dc of the curve 30. As can be seen from Fig. 2, before a point in time t0, the DC component i_alpha_dc (curve 31) is zero, the curve 30 being a sinusoidal curve which is expected when a constant current reference 12 is supplied to the current control 11.

At the point in time t0, a modified actual stator winding current is supplied to the closed loop current control 11, namely a constant current modification quantity corresponding to the alpha-component is utilized as a current modification quantity. Accordingly, the DC component 31 is suddenly increased substantially to the value i_dc substantially to the value as injected using addition element 18 illustrated in Fig. 1. The feedback modification is applied during the time interval from t0 to t1. In a time interval 32, voltage and current are determined/measured in the control loop 11. In the time interval 33 (or substantially instantaneously after or during data acquisition), the resistance determination is performed, for example by determination module 16 illustrated in Fig. 1.

Figs. 3 and 4 illustrate the responses when the feedback is modified according to the current modification quantity 34 illustrated in Fig. 3. At the point in time t0, the current modification quantity 34 jumps from 0 to -0.2 and then stays constant for a particular period in time. The curve 35 in Fig. 4 denotes the d-component (in the estimated dq-frame) of the measured current and the curve 36 denotes the q-component (in the estimated dq-frame) of the measured current. As can be seen, beyond the point in time t0, the d and q components (in the estimated dq-frame) of the measured currents exhibit some oscillatory features which apply to a current control having 50 Hz control bandwidth.

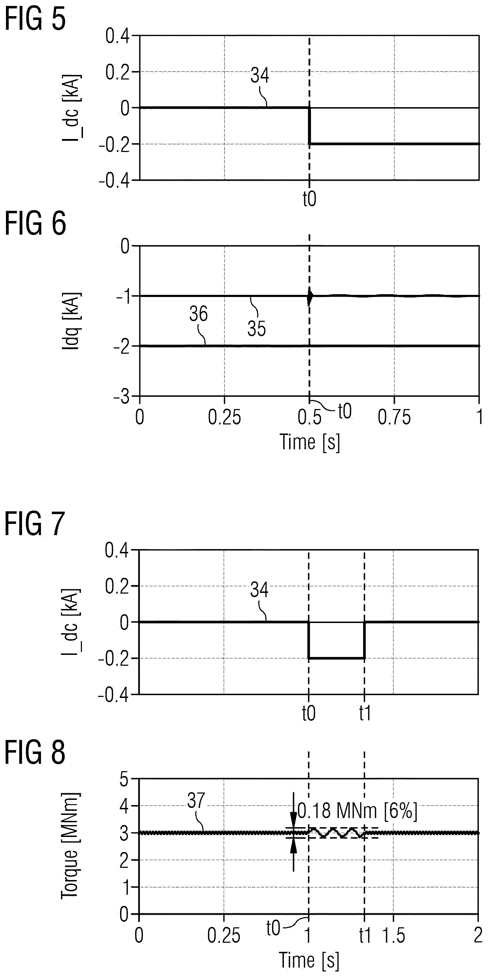

Figs. 5 and 6 also illustrate responses of the system when a current modification quantity 34 is added to the current feedback. Again, the current modification quantity 34 jumps at point in time t0 from 0 to -0.2. However, the currents 35, 36 in the d- and q-frame stay approximately constant which applies to a 300 Hz control bandwidth of the current control 11.

Figs. 7 and 8 illustrate again a response of the system after adding a current modification quantity 34, as is illustrated in Fig. 7. The curve 37 indicates the torque generated by the generator 4. At time t0, the current modification quantity is different from zero and some torque ripple is observed.

In the following, details for the determination of the resistance of the stator winding set are described. However, the invention is not restricted to the details as provided below.

An embodiment of the present invention includes to inject a DC current into α-axis component, it is found that the DC component in α-axis voltage is only related to stator resistance parameter, which can get rid of the influence of other parameters, i.e., position error, dq-axis inductances, and PM flux linkage. Thus, stator resistance can be independently estimated as the ratio of the DC component in α-axis voltage to the DC component in α-axis current. Moreover, the accuracy is not influenced by the bandwidth of the current control loop.

### A. Estimation Model Development

Under sensorless control, the machine model in stationary reference frame is written as: $\left[\begin{matrix}{u}_{α} \\ {u}_{β}\end{matrix}\right] = \left[\begin{matrix}R & 0 \\ 0 & R\end{matrix}\right] \left[\begin{matrix}{i}_{α} \\ {i}_{β}\end{matrix}\right] + \left(\begin{matrix}\frac{{dψ}_{α}}{dt} \\ \frac{{dψ}_{β}}{dt}\end{matrix}\right)$ $\left[\begin{matrix}{ψ}_{α} \\ {ψ}_{β}\end{matrix}\right] = \left[\begin{matrix}{L}_{αα} & {L}_{αβ} \\ {L}_{αβ} & {L}_{ββ}\end{matrix}\right] \left[\begin{matrix}{i}_{α} \\ {i}_{β}\end{matrix}\right] + {ψ}_{m} \left[\begin{matrix}cos \left({θ}_{r}\right) \\ sin \left({θ}_{r}\right)\end{matrix}\right]$ where *u_{α}*, *u_{β}*, *i_{α}*, *l_{β}*, *ψ_{α}*, and *ψ_{β}* are the voltages, currents, and flux-linkages in the two- phase stationary reference frame, respectively, *θᵣ* is the electrical position. *L_{αα}*, *L_{ββ}*, and *L_{αβ}* are the self- and mutual- inductances in the stationary reference frame, respectively. Furthermore, the inductances can be represented as: $\left\{\begin{matrix}{L}_{αα} = {L}_{0} + {L}_{1} cos \left(2{θ}_{r}\right) \\ {L}_{ββ} = {L}_{0} - {L}_{1} cos \left(2{θ}_{r}\right) \\ {L}_{αβ} = {L}_{1} sin \left(2{θ}_{r}\right) \\ {L}_{0} = \left({L}_{d}+{L}_{q}\right) / 2 \\ {L}_{1} = \left({L}_{d}-{L}_{q}\right) / 2\end{matrix}\right.$

By substituting (4) into (3), the αβ-axis voltage equations can be expressed by: $\left[\begin{matrix}{u}_{α} \\ {u}_{β}\end{matrix}\right] = \left[\begin{matrix}R & 0 \\ 0 & R\end{matrix}\right] \left[\begin{matrix}{i}_{α} \\ {i}_{β}\end{matrix}\right] + \left(\begin{matrix}\frac{{dψ}_{α}}{dt} \\ \frac{{dψ}_{β}}{dt}\end{matrix}\right)$ $\left[\begin{matrix}\frac{{dψ}_{α}}{dt} \\ \frac{{dψ}_{β}}{dt}\end{matrix}\right] = \left[\begin{matrix}\frac{{dL}_{αα}}{dt} {i}_{α} + {L}_{αα} \frac{{di}_{α}}{dt} + \frac{{dL}_{αβ}}{dt} {i}_{β} + {L}_{αβ} \frac{{di}_{β}}{dt} \\ \frac{{dL}_{ββ}}{dt} {i}_{β} + {L}_{ββ} \frac{{di}_{β}}{dt} + \frac{{dL}_{αβ}}{dt} {i}_{α} + {L}_{αβ} \frac{{di}_{α}}{dt}\end{matrix}\right] + {ω}_{r} {ψ}_{m} \left[\begin{matrix}- sin \left({θ}_{r}\right) \\ cos \left({θ}_{r}\right)\end{matrix}\right]$ where *θᵣ* = *ωᵣ*t. The voltage equations in (5) are developed for stator resistance estimation.

The block diagram of resistance estimation method according to an embodiment is shown in Fig. 1. The estimation process can be divided into four steps:
(1). Inject a DC current into α-axis current feedback.
(2). Extract the DC component in α-axis current (*i_{α_dc}*).
(3). Extract the DC component in α-axis voltage (*u_{α_dc}*).
(4). Calculate stator resistance, $\hat{R} = \frac{{u}_{α _ dc}}{{i}_{α _ dc}}$.

The detailed explanation is as follows:
After a DC current (*i_{dc}*) is injected into α-axis current feedback as shown in Fig. 2, AC errors are generator at the inputs of the current controller. Due to the first-order lowpass filtering characteristics of the current control loop, the dq-axis currents cannot fully follow constant dq-axis reference currents, as shown in Figs. 3 and 4. The characteristics of the current loop will be further discussed in Section C. Thus, there are AC components in dq-axis currents, as:

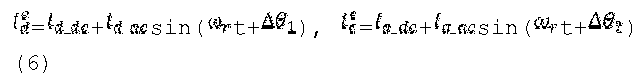

In (6), *l_{d_dc}* and *l_{c_dc}* represent the DC components, and *l_{d_ac}* and *l_{a_ac}* represent the amplitude of AC components. Δ*θ*₁, and Δ*θ*₂, represent the phase difference between current and real machine electrical position.

By performing an inverse park transformation on equation (6), after injecting *l_{dc}* into α-axis current, αβ-axis currents can be derived as: $\begin{matrix}\left[\begin{matrix}{i}_{α} \\ {i}_{β}\end{matrix}\right] = T \left({ω}_{r}t\right) \left[\begin{matrix}{i}_{d}^{e} \\ {i}_{q}^{e}\end{matrix}\right] + \left[\begin{matrix}{i}_{dc} \\ 0\end{matrix}\right] \\ = \left[\begin{matrix}cos \left({ω}_{r}t\right) & - sin \left({ω}_{r}t\right) \\ sin \left({ω}_{r}t\right) & cos \left({ω}_{r}t\right)\end{matrix}\right] \left[\begin{matrix}{i}_{d _ dc} + {i}_{d _ ac} sin \left({ω}_{r}t+Δ{θ}_{1}\right) \\ {i}_{q _ dc} + {i}_{q _ ac} sin \left({ω}_{r}t+Δ{θ}_{2}\right)\end{matrix}\right] + \left[\begin{matrix}{i}_{dc} \\ 0\end{matrix}\right] \\ = \left[\begin{matrix}cos \left({ω}_{r}t\right) & - sin \left({ω}_{r}t\right) \\ sin \left({ω}_{r}t\right) & cos \left({ω}_{r}t\right)\end{matrix}\right] \left[\begin{matrix}{i}_{d _ dc} \\ {i}_{q _ dc}\end{matrix}\right] + \left[\begin{matrix}{i}_{d _ ac} sin \left({ω}_{r}t+Δ{θ}_{1}\right) cos \left({ω}_{r}t\right) - {i}_{q _ ac} sin \left({ω}_{r}t+Δ{θ}_{2}\right) sin \left({ω}_{r}t\right) \\ {i}_{d _ ac} sin \left({ω}_{r}t+Δ{θ}_{1}\right) sin \left({ω}_{r}t\right) + {i}_{q _ ac} sin \left({ω}_{r}t+Δ{θ}_{2}\right) cos \left({ω}_{r}t\right)\end{matrix}\right] + \left[\begin{matrix}{i}_{dc} \\ 0\end{matrix}\right] \\ = {{\frac{1}{2} \left[\begin{matrix}2 {i}_{dc} + {i}_{d _ ac} sin \left(Δ{θ}_{1}\right) - {i}_{q _ ac} cos \left(Δ{θ}_{2}\right) \\ {i}_{d _ ac} cos \left(Δ{θ}_{1}\right) - {i}_{q _ ac} sin \left(Δ{θ}_{2}\right)\end{matrix}\right]}_{︸}}_{{I}_{αβ _ dc}} + {{\left[\begin{matrix}cos \left({ω}_{r}t\right) & - sin \left({ω}_{r}t\right) \\ sin \left({ω}_{r}t\right) & cos \left({ω}_{r}t\right)\end{matrix}\right] \left[\begin{matrix}{i}_{d _ dc} \\ {i}_{q _ dc}\end{matrix}\right]}_{︸}}_{{I}_{αβ 1}} \\ {{+ \frac{1}{2} \left[\begin{matrix}{i}_{d _ ac} sin \left(2{ω}_{r}t+Δ{θ}_{1}\right) + {i}_{q _ ac} cos \left(2{ω}_{r}t+Δ{θ}_{2}\right) \\ - {i}_{d _ ac} cos \left(2{ω}_{r}t+Δ{θ}_{1}\right) + {i}_{q _ ac} sin \left(2{ω}_{r}t+Δ{θ}_{2}\right)\end{matrix}\right]}_{︸}}_{{I}_{αβ 2}}\end{matrix}$

In (7), there are three current terms in αβ-axis currents, i.e., DC component (*I_{αβ_dc}*), fundamental component (*I*_{*αβ*1}), and second harmonic component (*I*_{*αβ*2}).

By substituting (7) into (5b), the DC component of the differential term of α-axis flux linkage in (5b) is zero, i.e., ${\left.\frac{{dψ}_{α}}{dt}\right|}_{dc} = 0$.

The detailed analysis is shown as follows:
As can be seen from (4), $\frac{{dL}_{αα}}{dt}$ and $\frac{{dL}_{αβ}}{dt}$ are the second harmonics. As can be seen from (7), $\frac{{di}_{α}}{dt}$ and $\frac{{di}_{β}}{dt}$ include the components of the fundamental and the second harmonic. Thus, the DC component of the differential term of α-axis flux linkage can only exist in product term of two second harmonics, i.e., $\frac{dL}{dt} i$ and $L \frac{di}{dt}$. Thus, the DC component of the differential term of α-axis flux linkage can be expressed by: $\begin{matrix}{\left.\frac{{dψ}_{α}}{dt}\right|}_{dc} = {\left.\frac{{dL}_{αα}}{dt}\right|}_{2} {i}_{α 2} + {\left.{L}_{αα}\right|}_{2} \frac{{di}_{α 2}}{dt} + {\left.\frac{{dL}_{αβ}}{dt}\right|}_{2} {i}_{β 2} + {L}_{αβ} \frac{{di}_{β 2}}{dt} \\ = - {i}_{d _ ac} {L}_{1} sin \left(2{ω}_{r}t\right) sin \left(2{ω}_{r}t+Δ{θ}_{1}\right) - {i}_{q _ ac} {L}_{1} sin \left(2{ω}_{r}t\right) cos \left(2{ω}_{r}t+Δ{θ}_{2}\right) \\ + {i}_{d _ ac} {L}_{1} cos \left(2{ω}_{r}t\right) cos \left(2{ω}_{r}t+Δ{θ}_{1}\right) - {i}_{q _ ac} {L}_{1} cos \left(2{ω}_{r}t\right) sin \left(2{ω}_{r}t+Δ{θ}_{2}\right) \\ - {i}_{d _ ac} {L}_{1} cos \left(2{ω}_{r}t\right) cos \left(2{ω}_{r}t+Δ{θ}_{1}\right) + {i}_{q _ ac} {L}_{1} cos \left(2{ω}_{r}t\right) sin \left(2{ω}_{r}t+Δ{θ}_{2}\right) \\ + {i}_{d _ ac} {L}_{1} sin \left(2{ω}_{r}t\right) sin \left(2{ω}_{r}t+Δ{θ}_{1}\right) + {i}_{q _ ac} {L}_{1} sin \left(2{ω}_{r}t\right) cos \left(2{ω}_{r}t+Δ{θ}_{2}\right) \\ = 0\end{matrix}$

Thus, after the DC current is injected into α-axis, the DC component of the differential term of α-axis flux linkage is zero. The DC response in α-axis voltage is: ${u}_{α _ dc} = {Ri}_{α _ dc} + {\left.\frac{{dψ}_{α}}{dt}\right|}_{dc} = {Ri}_{α _ dc}$ where *l_{α dc}* is the DC component in α-axis current. As can be seen from (9), DC response in α-axis voltage is only related to stator resistance after DC current is injected into α-axis. Thus, estimated stator resistance can be expressed by: $\hat{R} = \frac{{u}_{α _ dc}}{{i}_{α _ dc}}$

According to (10), stator resistance estimation can get rid of the influence of position estimation error. Moreover, stator resistance can be estimated independently without the requirement to know other parameters, i.e., dq-axis inductances and rotor PM flux linkage.

As shown in (6), R estimation is based on the assumption that there are AC components in dq-components (in the estimated dq-frame) of the currents, which is valid at the low control bandwidth. When there is a high control bandwidth, the influence on R estimation is discussed as follows.

### C. Influence of Different Bandwidths of Current Loop

When the bandwidth of the current loop is high enough, as discussed above, the dq-axis currents can fully follow the constant reference value even if a DC current is injected into α-axis, as shown in Figs. 5 and 6. Thus, there are no AC components in dq-components (in the estimated dq-frame) of the currents, as:

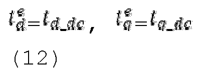

As (12) can be seen as a special case of (6), i.e., *l_{d_ac}*= *l_{a_ac}* = 0 .

Thus, by substituting (12) into (7), αβ-axis currents can be modified as: $\begin{matrix}\left[\begin{matrix}{i}_{α} \\ {i}_{β}\end{matrix}\right] = T \left({ω}_{r}t\right) \left[\begin{matrix}{i}_{d}^{e} \\ {i}_{q}^{e}\end{matrix}\right] + \left[\begin{matrix}{i}_{dc} \\ 0\end{matrix}\right] \\ = {{\left[\begin{matrix}{i}_{dc} \\ 0\end{matrix}\right]}_{︸}}_{{I}_{αβ _ dc}} + {{\left[\begin{matrix}cos \left({ω}_{r}t\right) & - sin \left({ω}_{r}t\right) \\ sin \left({ω}_{r}t\right) & cos \left({ω}_{r}t\right)\end{matrix}\right] \left[\begin{matrix}{i}_{d _ dc} \\ {i}_{q _ dc}\end{matrix}\right]}_{︸}}_{{I}_{αβ 1}}\end{matrix}$

Comparing (13) and (7), when bandwidth of current loop is high, there is no second harmonics in αβ-axis currents, and the DC component of α-axis current is equal to the injected DC current *l_{dc}*, i.e., *l_{α_dc}* = *l_{dc}.* By substituting (13) into (5b), it is obvious to derive that there is no DC component in the differential term of α-axis flux linkage.

Thus, after DC current (*l_{dc}*) is injected into α-axis, DC response in α-axis voltage is: ${u}_{α _ dc} = {Ri}_{dc} + {\left.\frac{{dψ}_{α}}{dt}\right|}_{dc} = {Ri}_{dc}$

As can be seen from (14), estimated stator resistance can be expressed by: $\hat{R} = \frac{{u}_{α _ dc}}{{i}_{dc}}$

Due to *l_{α_dc}* = *l_{dc}*, thus, (15) can be changed as: $\hat{R} = \frac{{u}_{α _ dc}}{{i}_{α _ dc}}$

By comparing the resistance estimation results in (10) and (16), whether the system has high or low bandwidth, stator resistance can be estimated as the ratio of the DC component in α-axis voltage to the DC component in α-axis current. Therefore, stator resistance estimation value is not affected by bandwidth of current loop.

It is worth noting that the DC component in α-axis voltage requires to be extracted for stator resistance estimation, and thus, only one fundamental period of DC current may be injected. Due to the short injection duration, the influence of transient torque fluctuations on the stability of the system can be ignored. As is shown in Figs. 7 and 8, 200A DC current injection cause 6% torque ripple.

Furthermore, the torque ripple increase could be well minimized in multi-system machines (i.e. having more than one winding set), by injecting differently the DC component in α-axis voltage among the various systems, i.e. synchronised signal injection with same amplitude and opposite signs leads to cancellation effect.

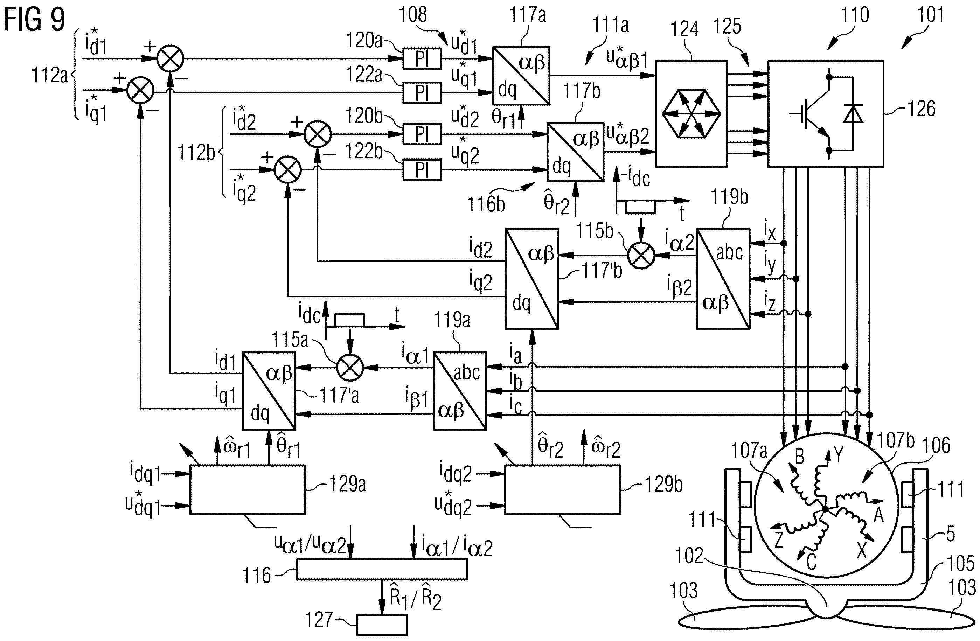

Fig. 9 schematically illustrates a wind turbine according to an embodiment of the present invention comprising an operating module according to an embodiment of the present invention. In Fig. 1 and 9, elements similar or identical in structure and/or function are provided with the same reference signs or with reference signs, which differ only within the first digit. A description of an element not described in one embodiment may be taken from a description of this element with respect to another embodiment.

The generator 104 of wind turbine 101 is a dual three-phase winding set generator having a first winding set 107a and a second winding set 107b. For each winding set 107a, 107b a control loop 111a, 111b is provided with components as in detail described with reference to Fig. 1 and the current feedback is modified for each winding set, in order to determine resistances R1, R2 for each winding set.

Embodiments of the present invention may provide the following advantages or technical effects:
1. The proposed stator resistance estimation can get rid of the influence of other parameters, i.e., position error, dq-axis inductances (including mutual inductance between winding sets), and PM flux linkage. By injecting a DC current into α-axis current feedback, it is found that the DC component of α-axis voltage is only related to stator resistance parameter. Thus, stator resistance can be independently estimated as the ratio of the DC component in α-axis voltage to the DC component in α-axis current.
2. The estimation accuracy of proposed stator resistance estimation is not influenced by the bandwidth of current loop. Regardless of whether the current loop bandwidth is high or low, stator resistance can be estimated as the ratio of the DC component in α-axis voltage to the DC component in α-axis current.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining a resistance (R) of at least one multi-phase stator winding set (7) of an electrical generator (4), in particular permanent magnet generator, the method comprising:
operating the generator (4) by performing closed loop current control (11) including to receive a reference stator winding current (12) and an actual stator winding current (13, 13'), in particular respective d-component and q-component in a rotor fixed dq-frame;
supplying, for a selected time interval (t0-t1), to the current control, a modified actual stator winding current (13') being different from the actual stator winding current (13) by a current modification quantity (34, 15);
determining the resistance (R) of the stator winding set (7) based on at least one component of an actual stator winding current (i_alpha_dc) or the current modification quantity (i_dc) and at least one component of a stator winding voltage (u_alpha_dc).

2. Method according to the preceding claim, wherein current modification quantity (34, 15) can be represented as at least one of:
a constant (DC) current modification quantity (i_dc) corresponding to the alpha-component of current in a stator-fixed alpha-beta coordinate system where in particular the following matrix can transform variables in a stator fixed abc-coordinate frame to variables in the alpha-beta-coordinate frame: ${T}_{3 s / 2 s} = \frac{2}{3} \left[\begin{matrix}1 & - \frac{1}{2} & - \frac{1}{2} \\ 0 & \frac{\sqrt{3}}{2} & - \frac{\sqrt{3}}{2}\end{matrix}\right] ;$
a constant (DC) current modification quantity of at least one phase, in particular two phases, of the stator current in the abc-coordinate system);
an AC current modification quantity of at least one dq-component of current.

3. Method according to one of the preceding claims,
wherein the constant current modification quantity (i_dc) corresponding to the alpha-component of current is added to an alpha-component output (i_alpha) of a transformation module (19) transforming actual currents (ia,b,c) in abc-frame to actual currents in alpha-beta frame, in order to obtain an alpha component (i'_alpha) of the modified actual current,
wherein in particular a beta-component of the modified actual current equals to a beta-component of the actual current.

4. Method according to one of the preceding claims, wherein the current control (11) generates, based on a deviation between the reference stator winding current and the modified actual currents, a voltage reference (21, 23), in particular component-wise in dq-coordinate system, wherein the voltage reference (21, 23) is employed to control the generator (4), in particular via control of a converter (26).

5. Method according to one of the preceding claims, wherein determining the resistance (R) includes:
determining a DC component of the alpha-component of the actual current or using the constant current modification quantity corresponding to the alpha component, in order to define a DC current quantity;
determining a DC component of an alpha-component of a reference voltage or extracting a DC component of the alpha component of the actual, in particular measured, voltage, in order to obtain a DC voltage quantity;
forming a ratio between the DC voltage quantity (u_alpha_dc) and the DC current quantity (i_alpha_dc), to obtain the resistance (R).

6. Method according to one of the preceding claims, wherein the stator winding reference current (12) in the dq-frame is constant,
wherein due to supplying the modified actual current to the current control, AC components of the actual current evolve.

7. Method according to one of the preceding claims, where at least one of the following holds:
supplying the modified actual current (13') to the current control is performed for a time period (t0-t1) between 0.1 s and 2 s;
the method is performed while the generator produces output power;
for rotor position determination a sensorless method is used.

8. Method according to one of the preceding claims, wherein the stator winding set (7) comprises for each of three phases a wire (wa, wb, wc) partly wound in slots of a stator of the generator to form one or more coils, the determined resistance (R) of the stator winding set (7) corresponding to an average of the resistances of the three wires which are connected in a star configuration.

9. Method according to one of the preceding claims, wherein the electrical machine (4) is electrically connected to a converter (26) including plural controllable switches, wherein based on the reference voltage (u_alpha, u_beta), in particular in a stator-fixed coordinate system, pulse width modulation signals are derived and supplied of the converter for opening and closing the switches for controlling the generator.

10. Method according to one of the preceding claims, wherein the generator (4) comprises at least one further multi-phase stator winding set, the method further comprising:
operating the generator by performing further closed loop current control including to receive a further reference stator winding current and a further actual stator winding current, in particular respective d-component and q-component in a rotor fixed dq-frame;
supplying, for a further selected time interval, to the further current control, a further modified actual stator winding current being different from the further actual stator winding current by a further current modification quantity;
determining a further resistance of the further stator winding set based on at least one component of the further actual stator winding current or the further current modification quantity and at least one component of a further stator winding voltage.

11. Method according to the preceding claim,
wherein the further current modification quantity is designed or determined such as to counteract, when applied to the further winding set, in particular to minimize, any vibration, in particular torque ripple, caused by applying the current modification quantity to the winding set,
wherein the further current modification quantity being in particular different, further in particular in sign and/or phase, from the current modification quantity, in particular having opposite sign,
wherein in case of a dual winding set generator, the further current modification quantity having still further in particular a substantially same amplitude compared to the current modification quantity,
wherein in case of a generator with more than two winding sets, the further current modification quantity may have a substantially different amplitude compared to the current modification quantity of the first winding set.

12. Method of operating an electrical generator (4) having at least one multi-phase stator winding set (7), in particular permanent magnet generator, the method comprising:
performing a method of determining a resistance (R) of the electrical generator according to one of the preceding claims;
using the determined resistance (R) to perform at least one of:
controlling the generator;
monitoring, in particular temperature monitoring, the generator, in particular stator;
defining at least one parameter of a controller, in particular PI controller;
performing sensorless position observation of the rotor.

13. Arrangement (10) for determining a resistance (R) of at least one multi-phase stator winding set (7) of an electrical generator (4), in particular permanent magnet generator, the arrangement comprising:
a closed loop current control (11) including to receive a reference stator winding current (12) and an actual stator winding current (13, 13'), in particular respective d-component and q-component in a rotor fixed dq-frame, connected to the generator for operating the generator;
a signal generator (14) adapted to supply, for a selected time interval, to the current control (11), a modified actual stator winding current (13') being different from the actual stator winding current (13) by a current modification quantity (i_dc, 34);
a determination module (16) adapted to determine the resistance (R) of the stator winding set (7) based on at least one component of an actual stator winding current (i_alpha_dc) or the current modification quantity (i_dc) and at least one component of a stator winding voltage (u_alpha_dc).

14. Operating module (8) for an electrical generator (4) having at least one multi-phase stator winding set (7), in particular permanent magnet generator, the operating module comprising:
an arrangement (10) for determining a resistance of the electrical generator according to the preceding claim;
at least one operation portion (27) adapted to use the determined resistance to perform at least one of:
controlling the generator;
monitoring, in particular temperature monitoring, the generator, in particular stator;
defining at least one parameter of a controller, in particular PI controller;
performing sensorless position observation of the rotor.

15. Wind turbine (1), comprising:
a hub (2) at which plural rotor blades (3) are mounted;
an electrical generator (4), in particular permanent magnet generator, having a rotor (5) coupled to the hub (2) and having a stator (6) including least one multi-phase stator winding set (7);
an arrangement (10) according to claim 13 or an operation module according to claim 14.
